# FASCICULE DE BREVET EUROPEEN

(11) **EP 1 493 151 B1**
(45) Date de publication et mention de la délivrance du brevet: **28.03.2007**
(21) Numéro de dépôt: 02727538.7
(22) Date de dépôt: 05.04.2002
(51) Int. Cl.: G11B 17/26

(54) **SYSTEME DE STOCKAGE DE SUPPORTS DE DONNEES**
SPEICHERSYSTEM FÜR DATENTRÄGER
MEDIA STORAGE SYSTEM

(43) Date de publication de la demande: 05.01.2005
(73) Titulaire: Schumacher, Alain, L-7340 Heisdorf (LU)
(72) Inventeur: Schumacher, Alain, L-7340 Heisdorf (LU)
(74) Mandataire: pronovem
(86) Numéro de dépôt international: PCT/EP2002/003852
(87) Numéro de publication internationale: WO 2003/085663

(56) Documents cités:
- EP-A- 0 722 168
- US-A- 5 319 621
- US-A- 5 431 520
- US-A- 6 072 766
- US-A- 6 075 758
- "DISK INPUT/OUTPUT STATION FOR ROTATING TRAY CAROUSEL" IBM TECHNICAL DISCLOSURE BULLETIN, IBM CORP. NEW YORK, US, vol. 37, no. 5, 1 mai 1994 (1994-05-01), pages 155-157, XP000453117 ISSN: 0018-8689
- "MULTI-INDEPENDENT TRAYS CAROUSEL" IBM TECHNICAL DISCLOSURE BULLETIN, IBM CORP. NEW YORK, US, vol. 37, no. 5, 1 mai 1994 (1994-05-01), pages 417-418, XP000453205 ISSN: 0018-8689

## Description

La présente invention concerne un système de stockage de supports de données avec un accès automatique à chacun des supports de données, comprenant au moins un dispositif de stockage pour stocker les supports de données, une station d'enregistrement et de lecture des supports de données, un dispositif de préhension et de transfert pour transférer chaque support de données séparément entre le dispositif de stockage et la station d'enregistrement et de lecture ou vice versa, dans lequel chaque dispositif de stockage comporte une série de plateaux de support rotatifs empilés les uns sur les autres qui sont portés par une colonne centrale verticale et qui peuvent être tournés séparément à l'aide d'un dispositif d'entraînement approprié agissant sur la périphérie de chacun des plateaux de support pour tourner ceux-ci entre une position de garage et une position d'accès, dans lequel chaque plateau de support comporte une série d'aires de dépôt, fermés vers l'extérieur dans un plan horizontal, pour recevoir les supports de données, ainsi qu'une ouverture arrangée avec les aires de dépôt en un cercle concentrique autour de la colonne centrale, l'arrangement étant tel que lorsque tous les plateaux de support se trouvent dans leur position de garage leurs ouvertures sont alignées verticalement l'une sur l'autre pour définir un canal ouvert.

Ces systèmes sont utilisés pour stocker de grandes quantités de données, notamment des disques CD, dans le cas d'une gestion décentralisé des disques où l'utilisateur avec son poste de travail est séparé géographiquement de ce centre de gestion et de stockage de données. Il s'agit en fait d'une bibliothèque de disques ou vidéothèque avec accès automatique et arbitraire à chaque disque individuels qui doit permettre à un grand nombre de clients ou d'utilisateurs à distance de transférer, en peu de temps, par commande télématique, un disque CD sélectionné de son aire de dépôt dans l'un des nombreux appareils de la station de lecture et d'enregistrement.

Un des critères de qualité d'un tel système est la rapidité de l'accès aux disques CD et de leur transfert dans la station de lecture et d'enregistrement. Cette rapidité devient toutefois d'autant plus problématique que la capacité de stockage du système augmente.

Le document IBM Technical Disclosure Bulletin, Vol. 37, No. 5, mai 1994, New York, US, page 155-158 : « disk input/output station for rotation carousel » décrit un magasin de disques constitué de plateaux de supports empilés les uns sur les autres et pouvant tourner séparément. Chaque plateau de support comporte sur une ligne circulaire concentrique, un certain nombre d'aires de dépôt et une ouverture de disque.

Les aires de dépôt des plateaux possèdent, chacune, une découpe alignée verticalement et qui s'étendent dans le plateau de support radialement vers l'extérieur. Lorsque les aires de dépôt et les ouvertures de tous les plateaux de support sont positionnées les unes au dessus des autres, un bras de préhension de disques horizontal peut pénétrer depuis l'extérieur des plateaux de support dans les aires de dépôt et ouvertures et se déplacer verticalement à travers tout le magasin.

Etant donné que les plateaux doivent avoir des ouvertures radiales le dispositif d'entraînement des plateaux doit être disposé au centre et doit être déplacé verticalement pour pouvoir être mis en prise avec les différents plateaux. Ceci occasionne toutefois une perte de temps. Une perte de temps supplémentaire est occasionnée par la conception du dispositif de transfert des disques. En effet lors de la mise en place d'un disque CD celui-ci doit être soulevé au-dessus de son plateau de support avant que celui-ci ne puisse être tourné dans la position souhaitée. De même lors de l'extraction d'un disque CD celui-ci doit d'abord être soulevé par le dispositif de transfert avant que le plateau de support ne puisse être tourné dans la position correcte de dégagement du puit vertical.

Le document EP 0 722 168 propose un système du genre décrit dans le préambule dont la capacité de stockage et la vitesse d'exécution sont sensiblement améliorés par rapport au système décrit dans le document précité. Dans le document EP 0722 168 les aires de dépôt des disques CD sur les plateaux de support sont radialement fermés ce qui permet d'entraîner les plateaux par leur périphérie et de prévoir pour chaque plateau de support un système d'entraînement séparé. Toutefois ce système arrive aussi progressivement aux limites de capacité de stockage lorsqu'on augmente sa hauteur. En effet vu que le puit d'accès est radialement fermé et que la station de lecture se trouve au-dessus du système, le dispositif de préhension et de transfert doit se déplacer verticalement à travers le puit ce qui peut allonger le temps d'accès aux disques notamment des plateaux inférieurs lorsque la hauteur de la pile de plateaux augmente. Le système de préhension et de transfert peut, en outre, être sujet des vibrations lorsque la hauteur augmente.

Le document US 6 075 758 A décrit un système de stockage avec les caractéristiques du préambule de la revendication 1.

Le but de la présente invention est de prévoir un système de stockage du genre décrit dans le préambule avec une grande capacité de stockage et une vitesse élevée d'accès aux disques.

Pour atteindre cet objectif la présente invention prévoit un système de stockage qui présente les caractéristiques de la revendication 1. D'autres particularités et caractéristiques de l'invention se trouvent dans les sous-revendications.

Le système de stockage proposé par la présente invention présente tous les avantages qu'offre le système proposé par le document EP 0 722 168. En outre, il présente l'avantage supplémentaire d'une plus grande vitesse d'exécution des ordres et d'une capacité de stockage en hauteur quasiment illimité. En effet étant donné que la station de lecture et d'enregistrement se trouve à côté du ou des dispositif(s) de stockage, le dispositif de préhension et de transfert des supports de données n'a plus besoin de se déplacer jusqu'au-dessus du dispositif pour déposer un support de données dans la station et pour l'en retirer. En outre, étant donné que, suivant un mode de réalisation préféré de l'invention, la station de lecture et d'enregistrement est constitué d'une pile d'appareils individuels de lecture et d'enregistrement qui peuvent être empilés sur toute la hauteur du système, le dispositif de préhension et de transfert peut choisir le premier appareil dont le tiroir de chargement est vide.

En outre, lorsque le système de stockage s'étend sur une hauteur relativement élevée il est possible de prévoir plusieurs dispositifs de préhension de transfert qui sont répartis sur toute la hauteur du dispositif ce qui augmente encore davantage la vitesse d'exécution.

D'autres avantages et particularités de l'invention ressortiront à la lecture d'un mode de réalisation avantageux présenté ci-dessous, à titre d'illustration, en référence aux figures annexées dans lesquelles
La figure 1 représente une vue en perspective d'une pile de plateaux de support d'un dispositif de stockage de disques CD.
La figure 2 montre schématiquement et en perspective un dispositif de stockage selon l'invention.
La figure 3 montre schématiquement plusieurs dispositifs selon la figure 2 empilés les uns sur les autres.
La figure 4 montre plus en détail une partie du sommet de la représentation de la figure 3.
La figure 5 montre schématiquement une vue plongeante sur un dispositif de stockage.
Les figures 6a et 6b montrent une paire de plateaux de support et
La figure 7 montre schématiquement les détails d'un dispositif d'entraînement d'un plateau.

La description détaillée qui va suivre va se référer, à titre d'illustration, à un système de stockage de disques CD. L'invention peut toutefois s'appliquer également à d'autres types de support de données.

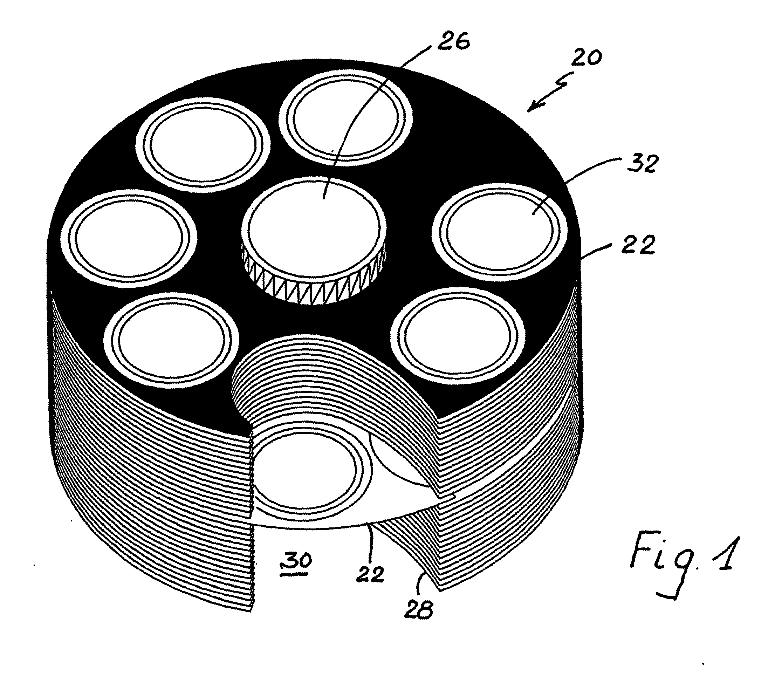

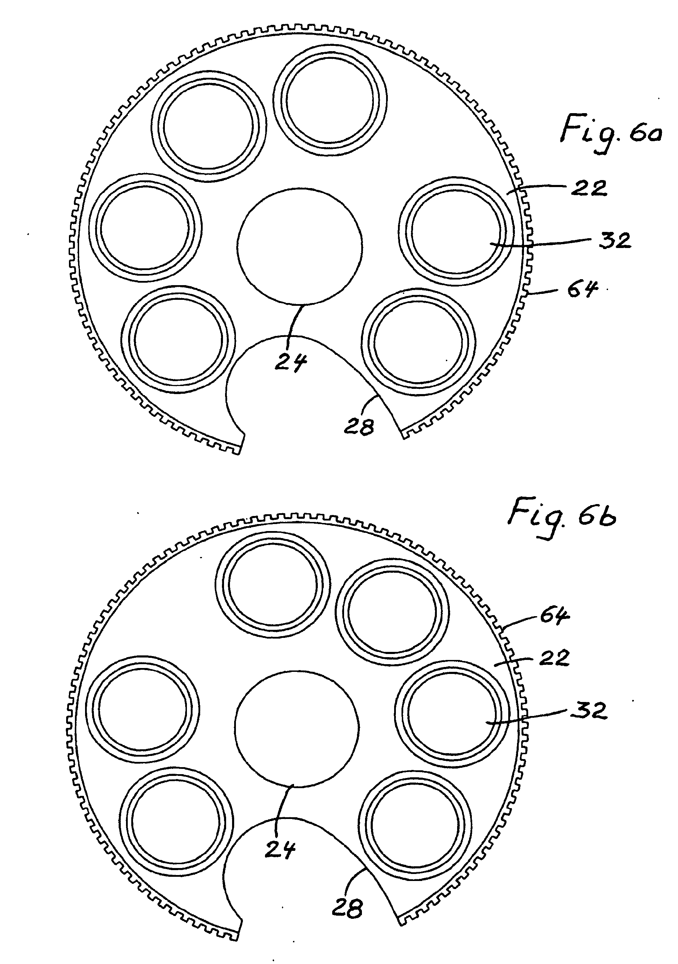

La figure 1 montre une vue en perspective d'un magasin à disques 20 selon la présente invention. Celui-ci est constitué d'un certain nombre, dans l'exemple représenté, de trente-deux plateaux de support circulaires 22 empilés les uns sur les autres et pourvus d'une ouverture centrale ronde 24 (voir également figures 6a et 6b). La pile est portée par une colonne centrale 26 qui s'étend axialement à travers les ouvertures, 24 des plateaux individuels.

Chaque plateau 22 comporte une encoche 28 avec un fond circulaire et une largeur supérieure au diamètre des disques CD. Cette encoche 28 s'ouvre en arc de cercle dans le bord périphérique du plateau 22. Tous les plateaux 22 peuvent tourner individuellement autour de la colonne 26. A chaque plateau 22 est attribué, dans le sens de la rotation, une position de garage de telle manière que, lorsque tous les plateaux 22 se trouvent dans leur position de garage, les encoches individuelles 28 sont alignées axialement et forment un canal 30, radialement ouvert, s'étendant sur toute la hauteur du magasin. Lorsqu'un plateau est tourné, comme le montre la figure 1, hors de sa position de garage, sa surface concernée devient accessible, à travers le canal 30, à un dispositif de préhension décrit plus en détail par la suite.

Comme on peut le voir sur la figure 1 et sur les figures 6a et 6b chaque plateau 22 comporte, outre l'ouverture centrale 24 et l'encoche 28 un certain nombre, dans l'exemple représenté, six aires de dépôt circulaires 32 pour le dépôt et le stockage de six disques CD. Les aires de dépôt 32 et le fond circulaire de l'encoche sont arrangés en couronne autour de l'ouverture centrale 24 de sorte que, lors de la rotation des plateaux 22 les aires de dépôts 32 traversent, chacune, l'une après l'autre, le canal 30. En cas de rotation adéquate des plateaux individuels 22, il existe, par conséquent, un libre accès aux plateaux individuels 22 et à chacune de leurs aires de dépôt 32 ainsi qu'aux disques CD qui s'y trouvent. Comme on peut le voir sur les figures 1 et 6, les aires de dépôt 32 sont arrangés en deux groupes de quatre et de deux aires 32. La raison de cet arrangement sera expliquée plus loin.

Les dimensions des plateaux 22 et le nombre d'aires de dépôt 32 sur chaque plateau 22, ainsi que le nombre de plateaux 32 empilés les uns sur les autres, peuvent être adaptés aux exigences individuelles de chaque entreprise. Dans le cas de 32 plateaux ayant chacun six aires de dépôt 32 le magasin représenté sur la figure 1 a une capacité de 192 disques CD. Il est par ailleurs concevable de prévoir des plateaux 22 plus grand ayant plus que six aires de dépôt 32.

Les plateaux individuels peuvent être en matière synthétique ou en métal, de préférence en aluminium.

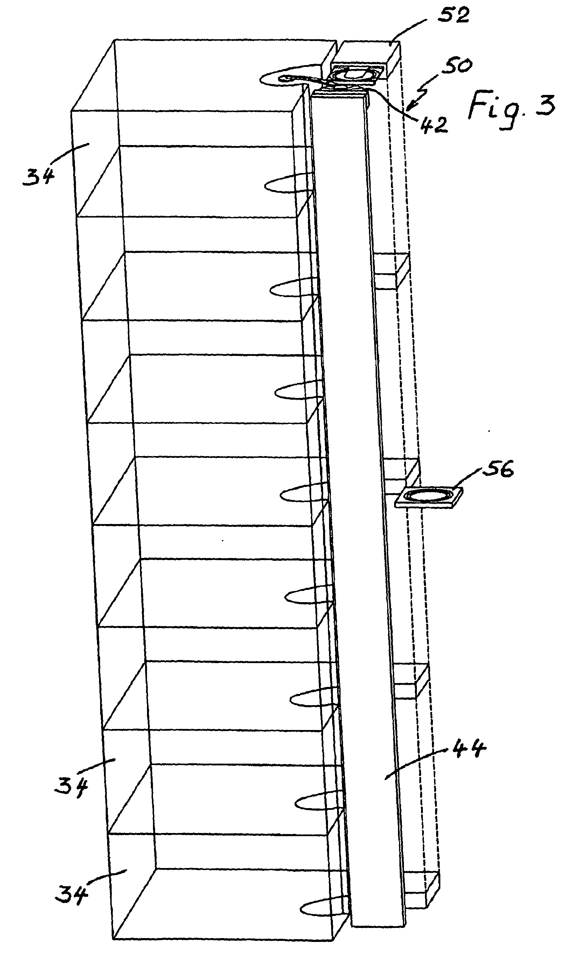

Les plateaux ont, à l'instar du document EP 0 722 168 un profil en forme d'assiette et leur montage sur la colonne centrale 26 est réalisé exactement de la même manière que dans ce document. La forme des plateaux et leur montage sur la colonne 26, de ce fait, ne seront pas décrit en détail dans le cadre de la présente demande et le lecteur voudra bien se référer au document EP 0 722 168, notamment sa figure 3 pour plus de détails à cet égard.

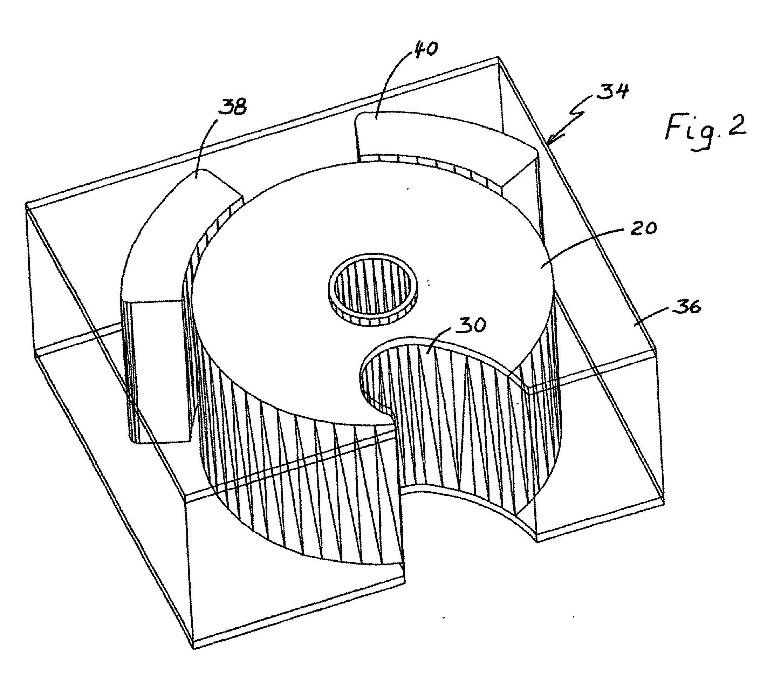

La figure 2 illustre schématiquement un dispositif de stockage 34 comprenant un magasin à disques 20 contenu dans un caisson 36 avec une ouverture latérale donnant accès au canal 30. Le magasin 20 est associé à une paire de systèmes d'entraînement 38, 40 des plateaux qui s'étendent sur toute la hauteur du magasin 20 et qui seront décrits plus en détail par la suite.

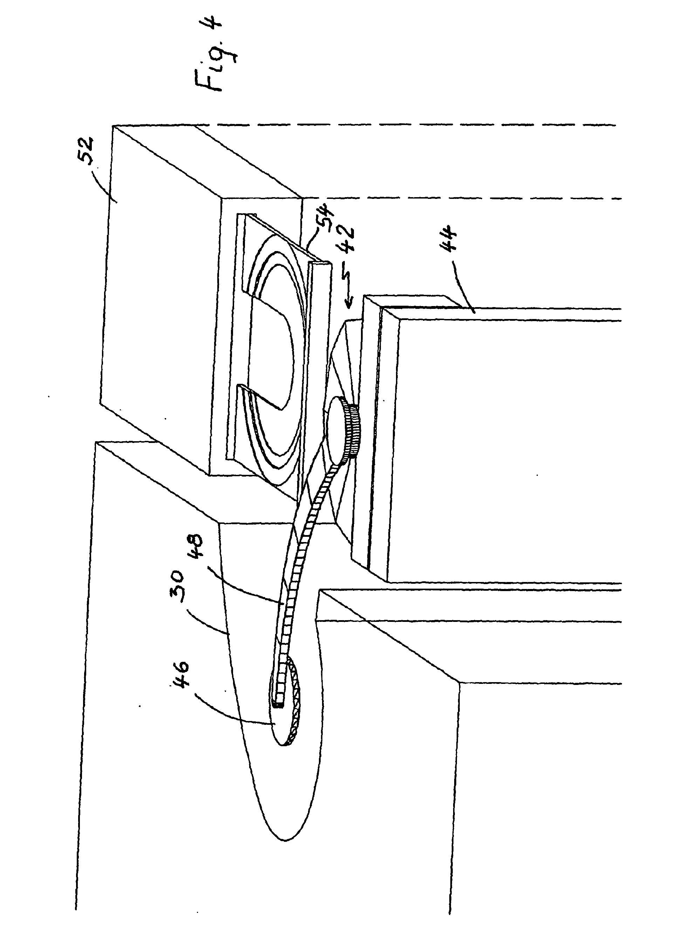

La figure 3 montre qu'il est possible d'empiler plusieurs dispositifs de stockage 34 de la figure 2 les uns sur les autres pour former ainsi une tour de stockage d'une grande capacité. La figure 3 montre schématiquement un dispositif de préhension et de transfert 42 visible plus en détail sur la figure 4 et qui coulisse le long d'un rail vertical 44 s'étendant sur toute la hauteur de la tour. Ce déplacement vertical peut être assuré par tout moyen connu en soi tel qu'une vis sans fin, courroie, câble etc. Suivant la hauteur de la tour il est possible de prévoir plusieurs dispositifs de préhension et de transfert coulissant le long du rail 44.

Chaque dispositif de préhension et de transfert 42 comporte un bras de préhension 48 pivotant au bout duquel se trouve une ventouse à action pneumatique ou autre dispositif qui peut saisir et transporter un disque CD. En raison du mouvement pivotant du bras de préhension 48 les encoches 28 des plateaux 22 définissant le canal 30 ne s'étendent pas radialement dans les plateaux 22 mais en arc de cercle conformément au rayon de pivotement de la ventouse 46.

La référence 50 sur la figure 3 désigne schématiquement la station de lecture et d'enregistrement pour les disques CD. La station 50 peut être constituée d'appareils 52 de lecture et d'enregistrement individuels courants, éventuellement légèrement adaptés, qui sont empilés les uns sur les autres pour former une tour en face du rail 44. Par station de lecture il faut comprendre une station comprenant ou bien des lecteurs, ou bien des enregistreurs ou bien les deux, ou bien encore des appareils pouvant à la fois lire et enregistrer. Comme le montre la figure 4 chaque appareil comporte un tiroir escamotable 54 pouvant recevoir un disque CD. Lorsque le tiroir 54 est dégagé, le centre de son aire de réception se trouve dans le rayon d'action du bras de préhension 48 et de sa ventouse 46.

Lorsqu'un utilisateur à distance souhaite consulter un disque CD déterminé il en fait la commande par voie télématique ce qui déverrouille le plateau 22 portant ce disque de sa position de garage dans laquelle l'encoche 28 est alignée sur le canal. Ce plateau 22 est ensuite tourné dans un sens ou dans l'autre, suivant l'aire de dépôt 32 qui porte le disque demandé, pour amener cette aire de dépôt avec le disque dans le canal 30. Pendant ce temps le dispositif de préhension 42 est descendu automatiquement tandis que le bras 48 pivote dans le canal 30 dans la position de la figure 4. A proximité immédiate du disque demandé le dispositif de préhension est stoppé tandis que la ventouse 46 est actionnée pour saisir le disque demandé. Le dispositif 42 est alors remonté le long du rail 44 jusqu'au premier appareil de lecture et d'enregistrement 52 qui est libre. Pendant ce temps le plateau 22 qui a fourni le disque retourne dans sa position de garage pour libérer le canal 30. Au niveau de l'appareil 52 le bras 48 est pivoté afin que la ventouse 46 puisse déposer le disque dans le tiroir dégagé 54 de l'appareil. Le retour d'un disque sur son plateau de stockage se fait selon le scénario inverse.

Les différents entraînements et mouvements sont commandés automatiquement par un ordinateur central, de sorte que tous les mouvements sont mutuellement coordonnés.

La référence 56 sur la figure 3 illustre schématique une cassette avec un disque destiné à être mise en place ou à remplacer un autre disque dans le dispositif de stockage.

Cette alimentation ou remplacement peut être effectué manuellement par un opérateur qui présente le disque 56 à la ventouse 46 et commande son dépôt dans un endroit choisi du dispositif selon le scénario ci-dessus.

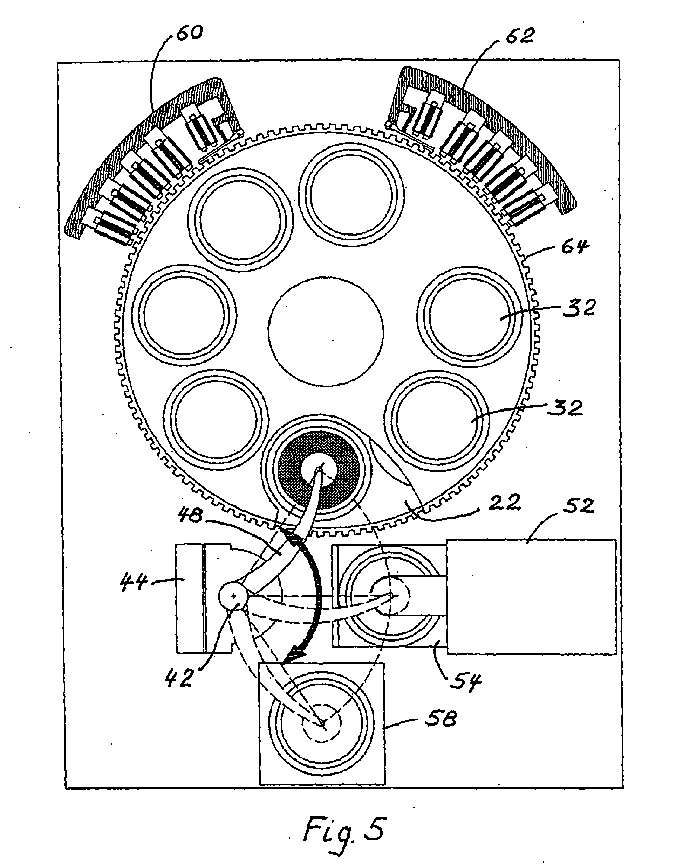

Cette opération peut également être effectuée automatiquement à l'aide d'une armoire-tour 58 (figure 5) dans laquelle sont empilés les disques à introduire dans le dispositif de stockage et qui se trouve en face du canal 30. Le dispositif de préhension 42 peut alors venir chercher automatiquement les disques dans l'armoire 58 sous la commande d'un opérateur.

La figure 5 montre une vue plongeante sur un dispositif de stockage dans lequel le dispositif de transfert et de préhension, représenté en traits pleins, est en train de prendre un disque d'un plateau 22 ou de le déposer sur celui-ci. La possibilité de pivotement du bras de préhension 48 est illustré par la flèche. Ce bras 48 est également représenté, en traits interrompus dans une position où il dessert le dispositif de lecture 52 et dans une position où il se sert dans l'armoire 58.

La fig. 5 montre également deux dispositifs 60 et 62 d'entraînement des plateaux 22. A chacun des plateaux 22 est associé un tel dispositif 60 et 62 qui sont arrangés en deux groupes sur toute la hauteur du dispositif. En effet, comme dans le document EP 0 722 168, en raison de la minceur des plateaux de support et de leur faible écartement vertical mutuel, il est préférable de prévoir deux groupes d'entraînement, l'un comprenant des moteurs d'entraînement pour les plateaux de support pairs et l'autre ceux pour les plateaux de support impairs.

Comme dans le dispositif de stockage connu par le document précité, chaque plateau de support 22 est doté à sa périphérie d'une couronne dentée 64 en fer doux magnétique, (voir aussi figures 6a et 6b) destinée à coopérer avec les dispositifs d'entraînement 60, 62 en vue de la rotation et du verrouillage des plateaux 22.

Toutefois contrairement au dispositif de stockage dans lequel les couronnes dentées s'étendent sur toute la périphérie des plateaux et ne présentent pas d'interruption pour l'entraînement et le verrouillage, les couronnes dentées 64 des plateaux 22 selon la présente invention sont forcément interrompus au niveaux des encoches 28, ce qui signifie que chaque plateau 22 ne peut être tourné que jusqu'à ce que son encoche 28 arrive au niveau du dispositif d'entraînement du plateau concerné. Pour résoudre le problème tous les dispositifs d'entraînement sont conçus pour faire tourner leur plateau 22 dans les deux sens. La conséquence est que chaque plateau 22 comporte un espace qui est perdu comme aire de dépôt vu que cet espace correspond à la position où l'encoche se trouverait virtuellement en face du dispositif d'entraînement de cette plaque et que dès lors cet espace ne peut pas être tourné dans une position angulaire obstruant le canal. C'est la raison pour laquelle les aires de dépôt 32 de chaque plateau 22 sont groupés par quatre et deux et entre ces deux groupes se trouve cet espace mort.

Une autre conséquence est qu'il faut deux types de plateaux 22, l'un pour les dispositifs d'entraînement 60 et l'autre pour les dispositifs d'entraînement 62. Concrètement, le plateau de la figure 6a sera actionné par le dispositif d'entraînement 60 se trouvant à gauche sur la figure 5 et le plateau de la figure 6b sera actionné par le dispositif 62. Le dispositif d'entraînement 60 fera tourner le plateau 22 de la figure 6a dans le sens des aiguilles d'une montre pour amener le groupe des deux aires de dépôt 32 dans la position d'obstruction du canal 30. En revanche pour amener le groupe des quatre aires de dépôt 32 dans une position d'obstruction du canal 30 le plateau 22 sera tourné dans le sens trigonométrique. Pour le plateau de la figure 6b qui est actionné par le dispositif d'entraînement 62 c'est le contraire.

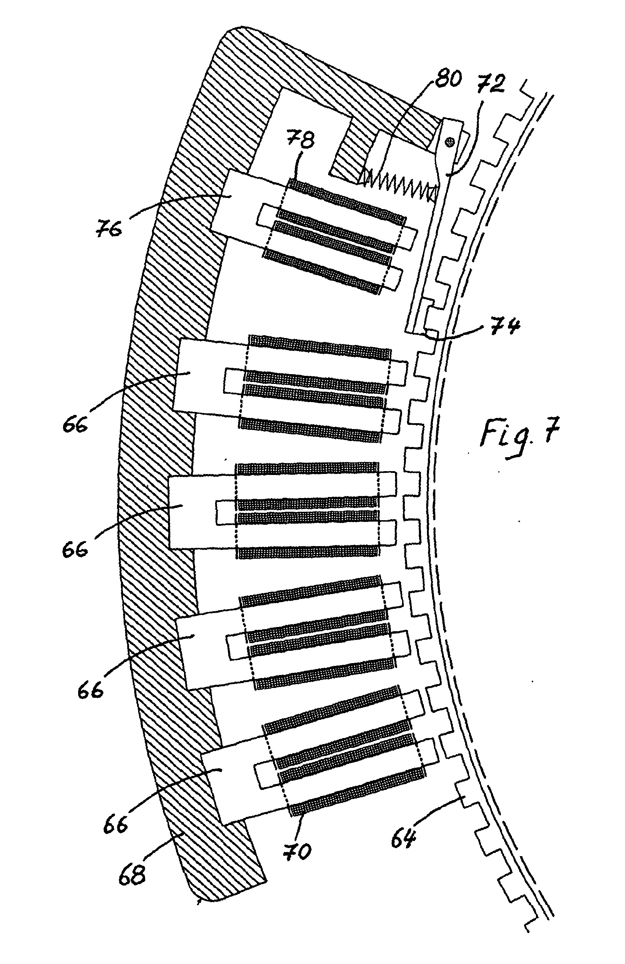

Les dispositifs d'entraînement des plateaux 22 sont analogues à ceux du dispositif connu par le document E 0 722 168. La figure 7 montre un exemple de réalisation avantageux d'un dispositif d'entraînement pour faire tourner le plateau de support associé autour de la colonne 26. Le plateau de support est indiqué sur la figure 7 par sa couronne dentée périphérique 64. L'entraînement est réalisé par un moteur pas à pas pseudo-linéaire connu en soi. En face de la couronne dentée 64 se trouvent quatre armatures d'aimant 66 qui sont fixées sur un rail de support 68 s'étendant le long de la pile de plateaux. Aux deux membres de chaque armature d'aimant 66 sont associées deux dents adjacentes de la couronne dentée 64 d'un plateau de support. Chaque membre des quatre armatures d'aimant porte un enroulement 70 qui est alimenté en courant continu par un circuit électrique connu en soi et non représenté. Par une commutation cyclique séquentielle de l'excitation des enroulements, chaque dent de la couronne dentée 64 est attirée par le champ magnétique alternatif d'un membre d'aimant vers l'autre et d'une armature d'aimant 66 vers la prochaine, ce qui engendre une rotation de la couronne dentée 64 qui forme ainsi le rotor du moteur pas-à-pas. L'accélération et le freinage des disques est également réalisé avec le moteur pas-à-pas.

Pour assurer un positionnement correct de chaque plateau de support 22 dans une position de garage ou dans l'une des six positions d'accès, c.à.d., d'obstruction du canal 30 par l'aire de dépôt, une position de verrouillage est attribuée à chaque aire de dépôt 32 et à l'encoche 28 de chaque plateau. A cet effet un dispositif de verrouillage est associé à chaque plateau et incorporé dans le dispositif d'entraînement correspondant.

Comme le montre la fig. 7 le dispositif de verrouillage est constitué par un levier 72 en fer doux monté de façon pivotante sur le rail de support 68 et dont l'extrémité libre est pourvue d'une tête 74 en forme d'assiette creuse ayant la forme complémentaire d'une dent de la couronne dentée 64. Ce levier est associé à une armature d'aimant 76 fixée sur le rail de support 68 et dont les deux membres portent un enroulement d'excitation 78 alimenté en courant continu par un circuit électrique approprié non représenté. Le levier 72 subit par ailleurs, l'action d'un ressort de compression 80 attaché au rail 68. Lorsque l'enroulement 78 n'est pas excité le levier 72 est poussé par le ressort 80 dans une position d'engagement avec une dent comme sur la figure 7, c.à.d., que le plateau est verrouillé. Lorsque l'enroulement est excité le levier 72 est attiré contre l'action du ressort et libère le plateau.

La commande de l'enroulement d'excitation 78 est bien entendu synchronisé avec le dispositif d'entraînement de sorte que chaque fois que l'entraînement d'un plateau est actionné, le plateau est automatiquement déverrouillé par l'excitation de l'enroulement 78.

Les systèmes d'entraînement et de verrouillage des plateaux se trouvent sous la commande de capteurs, non montrés, de la position angulaire des plateaux. Ces capteurs sont avantageusement des capteurs qui sont sensibles au passage et au défilement des dents individuelles des couronnes dentées 64.

## Revendications

1. Sytème de stockage de supports de données avec un accès automatique à chacun des supports de données, comprenant au moins un dispositif de stockage (34) pour stocker les supports de données, une station d'enregistrement et/ou de lecture (50) des supports de données, un dispositif de préhension et de transfert (42) pour transférer chaque support de données séparément entre le dispositif de stockage (34) et la station d'enregistrement et de lecture ou vice versa, dans lequel chaque dispositif de stockage (34) comporte une série de plateaux de support rotatifs (22) empilés les uns sur les autres qui sont portés par une colonne verticale (26) et qui peuvent être tournés séparément à l'aide d'un dispositif d'entraînement approprié (60, 62) agissant sur la périphérie de chacun des plateaux de support (22) pour tourner ceux-ci entre une position de garage et une position d'accès, dans lequel chaque plateau de support (22) comporte une série d'aires de dépôt (32), fermés vers l'extérieur dans un plan horizontal, pour recevoir les supports de données, ainsi qu'une ouverture arrangée avec les aires de dépôt (32) en un cercle concentrique autour de la colonne centrale, l'arrangement étant tel que lorsque tous les plateaux de support (22) se trouvent dans leur position de garage leurs ouvertures sont alignées verticalement l'une sur l'autre pour définir un canal ouvert (30) dans lequel les ouvertures des plateaux de support (22) sont des encoches (28) avec un diamètre supérieur à celui des supports de donnés et ouverts sur la périphérie des plateaux (22) et dans lequel les dispositifs d'entraînement (60, 62) des plateaux (22) sont conçus pour faire tourner ceux-ci dans les deux sens **caractérisé en ce que** la station d'enregistrement et/ou de lecture (50) ainsi que le dispositif de préhension et de transfert (42) se trouvent à proximité du canal ouvert (30) défini par les encoches (28) des plateaux (22), **en ce que** la station d'enregistrement et/ou de lecture (50) est une unité indépendante du système de stockage et comporte une multitude d'appareils d'enregistrement et/ou de lecture individuels empilés les uns sur les autres à proximité du dispositif de préhension et de transfert (42) et **en ce que** au moins un bras de préhension du dispositif de préhension et de transfert (42) est conçu pour coulisser le long du canal ouvert (30) défini par les encoches (28).

2. Système de stockage selon la revendication 1, **caractérisé en ce que** le dispositif de préhension et de transfert (42) comporte au moins un bras pivotant (48) portant à son extrémité libre un dispositif de préhension (46) des supports de données et pouvant coulisser le long d'un rail vertical (44) s'étendant sur toute la hauteur du système de stockage.

3. Système de stockage selon la revendication 1, **caractérisé en ce que** chaque plateau (22) est associé à un dispositif d'entraînement séparé (60, 62) et **en ce que** les dispositifs d'entraînement sont arrangés en deux groupes (60), (62) associés respectivement aux plateaux de support (22) pairs et aux plateaux de support (22) impairs.

4. Système de stockage selon la revendication 3, **caractérisé en ce que** chaque dispositif d'entraînement est constitué d'un moteur pas-à-pas pseudo-linéaire et **en ce que** chaque plateau de support (22) comporte une couronne dentée périphérique (64) en fer doux magnétique formant le rotor du moteur pas-à-pas.

5. Système de stockage selon l'une quelconque des revendications 1 à 4, **caractérisé en ce que** chaque plateau de support (22) comporte six aires de dépôt circulaires (32).

6. Système de stockage selon la revendication 5, **caractérisé en ce que** les six aires de dépôt (32) de chaque plateau (22) sont arrangés en deux groupes de quatre et de deux aires de dépôt (32) disposés respectivement de part et d'autre de l'encoche (28) de leur plateau (22) et en que celui-ci est tourné dans un premier sens pour transférer les aires de dépôt (32) du groupe de quatre de la position de garage vers la position d'accès et dans le sens opposé pour transférer les aires de dépôt (32) du groupe de deux de la position de garage vers la position d'accès.

7. Système de stockage selon l'une quelconque des revendications 1 à 6, **caractérisé par** un dispositif de verrouillage (22) dans leur position de garage et dans leur position d'accès.

8. Système de stockage selon la revendication 7, **caractérisé en ce que** chaque plateau (22) est associé à un dispositif de verrouillage constitué par un levier pivotant dont l'extrémité libre porte une tête (74) engageable dans une dent de la couronne dentée (64) sous l'action d'un ressort (80) et dont il est dégagé sous l'action d'un électro-aimant (76).

9. Système de stockage selon l'une quelconque des revendications 1 à 8, **caractérisé en ce que** chaque dispositif de stockage (34) est contenu dans un caisson (36) avec une ouverture latérale donnant accès au canal (30) et **en ce que** le système comporte plusieurs dispositifs de stockage (34) empilés les uns sur les autres.

## Claims

1. System for storing data media with automatic access to each of the data media, comprising at least one storage device (34) for storing the data media, a read/writer (50) of the data media, a picking and transfer device (42) for transferring each data medium separately between the storage device (34) and the read/writer, or vice versa, in which each storage device (34) comprises a series of rotary support platters (22) stacked one on top of the other which are carried by a vertical column (26) and which can be rotated separately using an appropriate drive device (60, 62) acting on the periphery of each of the support platters (22) to rotate these between a storage position and an access position, in which each support platter (22) comprises a series of storage spaces (32), closed toward the outside in a horizontal plane, to accommodate the data media, and an opening arranged with the storage spaces (32) in a concentric circle around the central column, the arrangement being such that when all the support platters (22) are in their storage position their openings are vertically aligned one on top of the other to define an open channel (30) in which the openings of the support platters (22) are slots (28) with a diameter greater than that of the data media and open to the periphery of the platters (22) and in which the drive devices (60, 62) for driving the platters (22) are designed to cause the platters to rotate in both directions, **characterized in that** the read/writer (50) and the picking and transfer device (42) are situated near the open channel (30) defined by the slots (28) in the platters (22), **in that** the read/writer (50) is a unit independent of the storage system and comprises a multiplicity of individual readers and/or writers stacked one on top of the other near the picking and transfer device (42), and **in that** at least one picking arm of the picking and transfer device (42) is designed to slide along the open channel (30) defined by the slots (28).

2. Storage system according to Claim 1, **characterized in that** the picking and transfer device (42) comprises at least one pivoting arm (48) bearing at its free end a picker (46) for picking the data media and able to slide along a vertical rail (44) stretching over the entire height of the storage system.

3. Storage system according to Claim 1, **characterized in that** each platter (22) is associated with a separate drive device (60, 62) and **in that** the drive devices are arranged in two groups (60), (62) one associated with the even-numbered support platters (22) and the other with the odd-numbered support platters (22).

4. Storage system according to Claim 3, **characterized in that** each drive device consists of a pseudo-linear stepping motor and **in that** each support platter (22) comprises a peripheral annulus gear (64) made of magnetic soft iron forming the rotor of the stepping motor.

5. Storage system according to any one of Claims 1 to 4, **characterized in that** each support platter (22) has six circular storage spaces (32).

6. Storage system according to Claim 5, **characterized in that** the six storage spaces (32) of each platter (22) are arranged in two groups, of four and of two, storage spaces (32) which are arranged one group on each side of the slot (28) in their platter (22) and **in that** this platter is turned in a first direction to transfer the storage spaces (32) of the group of four from the storage position to the access position and in the opposite direction to transfer the storage spaces (32) of the group of two from the storage position to the access position.

7. Storage system according to any one of Claims 1 to 6, **characterized by** a locking device (22) for locking in the storage position and in the access position.

8. Storage system according to Claim 7, **characterized in that** each platter (22) is associated with a locking device consisting of a pivoting lever the free end of which bears a head (74) that can be engaged in a tooth of the annulus gear (64) under the action of a spring (80) and from which it is disengaged under the action of an electromagnet (76).

9. Storage system according to any one of Claims 1 to 8, **characterized in that** each storage device (34) is contained in a casing (36) with a lateral opening giving access to the channel (30), and **in that** the system comprises several storage devices (34) stacked one on top of the other.

## Patentansprüche

1. Lagerungssystem für Datenträger mit einem automatischen Zugriff zu einem jeden der Datenträger, System welches aufweist: mindestens eine Lagerungsvorrichtung (34) zum Lagern der Datenträger; eine Station zum Aufzeichnen und/oder zum Ablesen der Datenträger(50); eine Vorrichtung zum Greifen und zum Überführen (42) mit welcher ein jeder Datenträger getrennt zwischen der Lagerungsvorrichtung (34) und der Station für das Aufzeichnen und für das Ablesen, oder umgekehrt, überführt werden kann, wobei eine jede Lagerungsvorrichtung (34) eine Reihe von drehbaren Trägertellern (22) umfasst, welche die einen auf den anderen gestapelt sind wobei dieselben von einer vertikalen Kolonne (26) getragen werden, und welche getrennt voneinander gedreht werden können unter Zuhilfenahme einer geeigneten Antriebsvorrichtung (60, 62), die auf die Peripherie eines jeden der Trägerteller (22) einwirkt, um diese zwischen einer Parkstellung und einer Zugreifstellung zu drehen, wobei ein jeder Trägerteller (22) eine Reihe von Lagerbereichen (32) beinhaltet, welche in der horizontalen Ebene nach außen hin geschlossen sind, um die Datenträger aufzunehmen, sowie eine Öffnung, welche mit den Lagerbereichen (32) in einem konzentrischen Kreis um die vertikale Kolonne herum angeordnet ist, wobei die Anordnung derart gestaltet ist, dass, wenn alle Trägerteller (22) sich in ihrer Parkstellung befinden, ihre Öffnungen die einen vertikal über den anderen aufgereiht sind, um einen offenen Kanal (30) zu bestimmen, in welchem die Öffnungen der Trägerteller (22) aus Ausschnitten (28) bestehen mit einem Durchmesser, welcher größer ist als derjenige der Datenträger, und mit einer Öffnung auf der Peripherie der Trägerteller (22), und wobei die Antriebsvorrichtungen (60, 62) für die Trägerteller (22) ausgelegt sind, um diese in die beiden Richtungen drehen zu lassen, **dadurch gekennzeichnet, dass** die Station zum Aufzeichnen und/oder zum Ablesen (50) sowie die Vorrichtung zum Greifen und zum Überführen (42) sich in der Nähe des offenen Kanals (30) befinden, welcher durch die Ausschnitte (28) in den Trägertellern (22) begrenzt wird, dass die Station zum Aufzeichnen und / oder zum Ablesen (50) eine von dem Lagerungssystem unabhängige Einheit darstellt und eine Vielzahl von individuellen Geräten zum Aufzeichnen und / oder zum Ablesen enthält, welche die einen auf den anderen gestapelt sind in der Nähe der Vorrichtung zum Greifen und zum Überführen (42), und dass mindestens ein Greifarm der Vorrichtung zum Greifen und zum Überführen (42) derart ausgelegt ist, dass er entlang dem offenen Kanal (30) gleiten kann, welcher durch die Ausschnitte (28) begrenzt wird.

2. Lagerungsanordnung gemäß Anspruch 1, **dadurch gekennzeichnet, dass** die Vorrichtung zum Greifen und zum Überführen (42) mindestens einen schwenkbaren Arm (48) umfasst, welcher an seinem freien Ende eine Vorrichtung zum Greifen (46) der Datenträger aufweist und welcher entlang einer vertikalen Schiene (44) gleiten kann, welche sich über die gesamte Höhe des Lagerungssystems erstreckt.

3. Lagerungsanordnung gemäß Anspruch 1, **dadurch gekennzeichnet, dass** einem jeden der Trägerteller (22) eine separate Antriebsvorrichtung (60, 62) zugeordnet ist und dass die Antriebsvorrichtungen in zwei Gruppen angeordnet sind (60), (62), welche jeweilig den geraden Trägertellern (22) und den ungeraden Trägertellern (22) zugeordnet sind.

4. Lagerungsanordnung gemäß Anspruch 3, **dadurch gekennzeichnet, dass** eine jede Antriebsvorrichtung aus einem pseudolinearen Schrittmotor besteht und dass ein jeder Trägerteller (22) einen peripheren Zahnkranz (64) aus magnetischem Weicheisen aufweist, welcher den Rotor des Schrittmotors bildet.

5. Lagerungsanordnung gemäß irgendeinem der Ansprüche 1 bis 4, **dadurch gekennzeichnet, dass** ein jeder Trägerteller (22) sechs kreisrunde Lagerbereiche (32) umfasst.

6. Lagerungsanordnung gemäß Anspruch 5, **dadurch gekennzeichnet, dass** die sechs Lagerbereiche (32) eines jeden Trägerteller (22) in zwei Gruppen von vier und von zwei Lagerbereichen (32) angeordnet sind, welche auf der einen beziehungsweise auf der anderen Seite des Ausschnittes (28) ihrer Trägerteller (22) liegen, und dass dieser Trägerteller in eine erste Richtung gedreht wird, um die Lagerbereiche (32) der Vierergruppe von der Parkstellung in die Zugreifstellung zu überführen, und in die entgegengesetzte Richtung gedreht wird, um die Lagerbereiche (32) der Zweiergruppe von der Parkstellung in die Zugreifstellung zu überführen.

7. Lagerungsanordnung gemäß irgendeinem der Ansprüche 1 bis 6, **gekennzeichnet durch** eine Verriegelungseinrichtung (22) in ihrer Parkstellung und in ihrer Zugreifstellung.

8. Lagerungsanordnung gemäß Anspruch 7, **dadurch gekennzeichnet, dass** ein jeder Trägerteller (22) einer Verriegelungseinrichtung zugeordnet ist, welche aus einem schwenkbaren Hebel besteht, dessen freies Ende einen Kopf (74) trägt, welcher infolge der Einwirkung einer Feder (80) in einen Zahn des Zahnkranzes (64) einschnappen kann, und welcher aus demselben wieder unter der Einwirkung eines Elektromagneten (76) losgekuppelt werden kann.

9. Lagerungsanordnung gemäß irgendeinem der Ansprüche 1 bis 8, **dadurch gekennzeichnet, dass** eine jede Lagerungsvorrichtung (34) sich in einem Behälter (36) mit einer seitlichen Öffnung mit Zugang zu dem Kanal (30) befindet und dass das System mehrere die einen über den anderen gestapelte Lagerungsvorrichtungen (34) umfasst.
